# EUROPÄISCHE PATENTSCHRIFT

(11) **EP 0 588 051 B1**
(45) Veröffentlichungstag und Bekanntmachung des Hinweises auf die Patenterteilung: **30.10.1996**
(21) Anmeldenummer: 93112744.3
(22) Anmeldetag: 09.08.1993
(51) Int. Cl.: F16L 59/00, F16L 1/028

(54) **Verfahren zur grabenlosen Verlegung einer Fernwärmeleitung, eine derartige grabenlos verlegte Fernwärmeleitung sowie Vorrichtungen zur Durchführung des Verfahrens**
Method for laying a heating pipe without excavation, heating pipe and devices for implementing this method
Procédé pour la pose d'un conduit de chauffage sans excavation, conduit de chauffage et dispositifs pour la mise en oeuvre de ce procédé

(30) Priorität: 16.09.1992 DE 4230892
(43) Veröffentlichungstag der Anmeldung: 23.03.1994
(73) Patentinhaber: Witzenmann GmbH Metallschlauch-Fabrik Pforzheim, D-75175 Pforzheim (DE)
(72) Erfinder: Berger, Peter W., Dipl.-Ing., D-75181 Pforzheim (DE); Gropp, Reinhard, Dipl.-Ing., D-75305 Neuenbürg (DE); Meyer, Bodo, Dipl.-Ing., D-99510 Apolda (DE); Werner, Dietrich, Prof. Dr., D-99427 Weimar (DE)
(74) Vertreter: Lemcke, Rupert, Dipl.-Ing.

(56) Entgegenhaltungen:
- EP-A- 0 303 085
- WO-A-91/11646
- CH-A- 494 363
- CH-A- 632 329
- DE-A- 2 250 286
- FR-A- 1 563 976

## Beschreibung

Die Erfindung betrifft ein Verfahren zur grabenlosen Verlegung von Abschnitten von Fernwärmeleitungen im Erdreich.

Fernwärmeleitungen werden in der Regel in offenen Leitungsgräben verlegt, die in innerstädtischen Bereichen, insbesondere bei hochwertigen Straßenoberflächen, Hindernissen im unterirdischen Bauraum in Form von querenden Leitungen, Bäumen, Fremdanlagen etc. erhebliche Mehrkosten verursachen oder bei Aufgrabungsverboten bzw. -beschränkungen gänzlich ausgeschlossen sind.

Als Abhilfe bietet sich hier die grabenlos erfolgende Herstellung von Leitungen. Diese ist an sich seit Jahren für Anschluß- und Versorgungsleitungen in der Gas- und Wasserversorgung genutzt und bewährt, wobei insbesondere außen glattwandige Kunststoffrohre mit Hilfe von sogenannten Horizontalbohrtechniken eingebracht wurden. Mit diesen Techniken ist es gelungen, unterirdische Hindernisse zu berücksichtigen bzw. zu umgehen, so daß derartige unterirdische Gas- oder Wasserleitungsabschnitte zwischen Baugruben verhältnismäßig geringer Größe leicht verlegt werden konnten.

Im Hinblick auf die Verlegung von Fernwärmeleitungen ergeben sich jedoch besondere Schwierigkeiten, weil Fernwärmeleitungen bedingt durch die Wärmedämmung des Mediumrohres einen deutlich größeren Außendurchmesser aufweisen. Darüber hinaus müssen die in das horizontale Bohrloch einzuziehenden Leitungen einerseits biegsam sein, um den für das Umfahren der Hindernisse notwendigen Richtungsänderungen folgen zu können, andererseits aber genügend Steifigkeit aufweisen, um die beim Einziehen in das vom Erdreich begrenzte Bohrloch auftretenden Zugkräfte schadlos zu ertragen. Man hat bisher Versuche mit flexiblen Verbundrohren vorgenommen, die beispielsweise aus einem inneren und einem äußeren Wellrohr mit dazwischen angeordneter PUR-Schaum-Wärmedämmung aufgebaut und auf Trommeln aufwickelbar sind (Fernwärme international-FWI, Jg. 19 (1990), Heft 1, S. 45 bis 48).

Dieses bekannte Verfahren zur Verlegung von kompletten Fernwärmeleitungen ist auf nur relativ kurze Leitungsstrecken zwischen zwei Baugruben und vor allem auch auf kleinere Durchmesser begrenzt und beschränkt damit den Anwendungsbereich dieser Verlegetechnik.

Der Grund ist, daß die verwendeten, vorerwähnten teilelastischen Verbundleitungen beim Einziehen in das Bohrloch eine erhebliche Streckung erfahren. Im Hinblick auf die Erdverlegung entlang vorhandener Hindernisse erweisen sie sich außerdem als verhältnismäßig biegesteif.

Aufgabe der Erfindung ist es, zur Behebung der vorgenannten und weiterer in der Fachliteratur genannter Nachteile ein Verfahren zur grabenlosen Verlegung von Abschnitten von Wärmeleitungen im Erdreich anzugeben, das es insbesondere erlaubt, mit auf Trommeln gut aufwickelbaren Materialien zu arbeiten, hinsichtlich des Leitungsquerschnittes einen größeren Bereich abdecken und ausreichend lange Leitungsabschnitte verlegen zu können. Dabei soll das im Ergebnis entstehende Leitungssystem selbstkompensierend sein, ohne weiteres die Kopplung der grabenlos erdverlegten Leitungsabschnitte mit anschließenden Leitungsabschnitten möglich machen und es sollen sich die für die grabenlose Verlegung bewährten Horizontalbohrtechniken anwenden lassen.

Zum erfindungsgemäßen Verfahren werden eine entsprechende Konstruktion einer Fernwärmeleitung sowie Vorrichtungsmittel zur Erdverlegung angegeben.

Die der Erfindung zugrundeliegende Aufgabe ist bezüglich des prinzipiell zugrundeliegenden Verfahrens durch die Schritte nach Anspruch 1 gelöst.

Der Kern der Erfindung beruht also auf der Teilung der Verlegearbeit für das Mantelrohr einer Fernwärmeleitung und der Verlegung des "Inneren" in Form eines Metallwellschlauches mit einer diesen umgebenden Wärmedämmschicht. Dies ermöglicht das Einbringen eines Mantelrohres in an sich bekannter, einfacher Verlegetechnik, so daß zunächst - auch unter Berücksichtigung zu umgehender Hindernisse - ein Kanal innerhalb des Erdreiches gebildet ist.

In diesen Kanal wird nun der übrige, eine Fernwärmeleitung ausmachende Teil eingezogen, wobei die Einziehtechnik sich eines Mittels bedient, das darin besteht, daß das aus Metallwellschlauch und Wärmedämmung bestehende, einzuziehende Material über seine gesamte Länge gleichmäßig von außen und/oder innen ergriffen und in das bereits verlegte Mantelrohr eingebracht wird. Dadurch ist nicht nur eine problemlose "Ausfüllung" des Mantelrohres mit dem übrigen Material der Fernwärmeleitung gewährleistet. Vielmehr ist auch sichergestellt, daß dieses ausfüllende, übrige Material gleichmäßig und ohne bleibende Verformungen innerhalb des Mantelrohres in Position kommt, so daß sich im Ergebnis eine Fernwärmeleitung ergibt, die ohne Vorschädigung in das Erdreich einzuziehen ist und mit der, unterstützt durch die erfindungsgemäße Verfahrensweise, insbesondere auch komplizierte Verläufe innerhalb des Erdreiches überwunden werden können, ohne daß es hier zu besonderen Knickungen und Querschnittsveränderungen der schlußendlich sich ergebenden Fernwärmeleitung kommt. Denn, wie bereits vorstehend gesagt, konnte das Mantelrohr zunächst einmal mit bekannten grabenlosen Verlegetechniken in auch hinsichtlich komplizierter Verläufe innerhalb des Erdreiches anspruchsvoller Weise in das Erdreich eingebracht werden. In diesen nunmehr festgelegten und mit dem Erdreich in gutem Verbund sich befindenden Mantelrohrkanal wurde dann der innere Ausbau der Fernwärmeleitung in einer Form eingezogen, die auf die Überwindung von Hindernissen innerhalb des Erdreiches keine Rücksicht mehr zu nehmen braucht, da diese Hindernisse ja bereits durch das Mantelrohr überwunden sind, die sich vielmehr nur noch darauf orientieren mußte, innerhalb des Mantelrohres, das erfindungsgemäß ja glatt ausgebildet ist, seinen Weg zu finden.

Wie sich gezeigt hat, erlaubt die erfindungsgemäße Verlegetechnik gegenüber dem bisher Bekannten insbesondere die grabenlosen Erdverlegung größerer Querschnitte und längerer Leitungsabschnitt für wärmegedämmte Fernwärmeleitungen, was auf der erfindungsgemäßen "Arbeitsteilung" zwischen Verlegung von Mantelrohr einerseits und übrigen Teilen der Fernwärmeleitung andererseits beruht. Damit erbringt aber das erfindungsgemäße Verfahren nicht nur diesen Querschnittsvorteil, der zusätzliche, erhebliche Anwendungsbereiche eröffnet, sondern es verbilligt und vereinfacht auch die grabenlose Erdverlegung von Fernwärmeleitungen.

In Ausbildung des erfindungsgemäßen Verfahrens hat es sich als vorteilhaft erwiesen, daß das Mediumrohr und dessen umgebende, elastisch verformbare Wärmedämmschicht über ein die Wärmedämmschicht umgebendes Geflecht aus gleitfähigen oder mit gleitfähigen Mitteln versehenen Metalldrähten oder Kunststoffasern eingezogen werden. Eine solche Umflechtung hat bekannterweise die Eigenart, unter Zugbelastung ihren Durchmesser zu reduzieren. Zieht man nun Mediumrohr und dessen umgebende Wärmedämmschicht über ein diese Einheit umgebendes Geflecht ein, indem das Geflecht die Zugbelastung aufnimmt, so wird für den Einziehvorgang der Gesamtdurchmesser der das Mediumrohr umgebenden Wärmedämmschicht reduziert, womit sich ein problemloses Hereingleiten dieser Einheit in den durch das glattwandige Mantelrohr bereits gebildeten Kanal ergibt. Ist der Einziehvorgang beendet und wird das Geflecht von der Zugbelastung befreit, so dehnt sich die Wärmedämmschicht wieder auf ihren ursprünglichen, gewollten Durchmesser aus, mit dem sie satt im Mantelrohr anliegt.

Anstelle dieser Vorgehensweise für das Einziehen oder auch in deren Ergänzung kann erfindungsgemäß vorgesehen werden, daß das Einziehen von Mediumrohr und dessen umgebender Wärmedämmschicht aus gleitfähigem Material über ein einzelne Wellen des Mediumrohres von innen gleichzeitig ergreifendes Zugmittel erfolgt. Hier ist also von dem Gedanken Gebrauch gemacht, das Mediumrohr, welches ja ein Metallwellschlauch ist, nicht nur an einem seiner Enden unter Zugbelastung zu setzen, sondern die Zugbelastung für den Einziehvorgang über die gesamte Länge des Metallwellschlauches zu verteilen, so daß sich keine örtlichen Überdehnungen ergeben können.

Ist unter Anwendung dieser erfindungsgemäßen Verfahrensweisen die aus Mediumrohr und dieses umgebender Wärmedämmschicht gebildete Einheit in das Mantelrohr eingezogen, so ist es in weiterer Ausbildung des erfindungsgemäßen Verfahrens vorgesehen, daß das Mediumrohr nach Abschluß des Einziehvorganges in Axialrichtung auf ein wenigstens die spätere Wärmedehnung des Mediumrohres überschreitendes Maß vorgespannt bzw. einer entsprechenden Längenänderung unterzogen wird.

Dieser Verfahrensschritt ermöglicht eine innere Kompensation des Mediumrohres um einen bestimmten Längenanteil, der zum Beispiel bei 2,5% liegen kann, so daß bei voller Betriebstemperatur der Fernwärmeleitung keine Stauchkräfte dadurch auftreten können, daß das Mediumrohr temperaturbedingt sich in seiner Länge vergrößert, wodurch seitliches Ausweichen verhindert wird. Denn solche seitlichen Ausweichtendenzen würden die Wärmedämmschicht örtlich zusammendrücken und damit zu erhöhten Temperaturen am Mantelrohr und zu unkontrollierbaren Wärmeverlusten führen können.

Fernwärmeleitungen gemäß dem Oberbegriff des Anspruchs 6 sind schon bekannt, z.B. CH-A-632 329. Demgegenüber ist die erfindungsgemäße Fernwärmeleitung durch die Merkmale des Anspruchs 6 gekennzeichnet. Dabei kann die Wärmedämmschicht von einem sich unter Zugbelastung radial verjüngenden Geflecht aus gleitfähigen oder mit gleitfähigen Mitteln versehenen Metalldrähten oder Kunststoffasern umgeben sein. In weiterer Einzelausbildung kann vorgesehen sein, daß die Wärmedämmschicht des Mediumrohres durch konzentrisch miteinander in Eingriff befindliche, gegenseitig axial beabstandete Ringe gebildet ist, welchletzteres zum Beispiel durch Eingreifen in die Wellen des Mediumrohres gegeben sein kann. Solche Ringe erlauben axiale Abstandsänderungen jeweils auf der Außen- bzw. Innenseite des Mediumrohres, was sich nicht nur günstig für das Aufwickeln des von der Wärmedämmschicht umgebenden Mediumrohres auf Trommeln auswirkt sondern auch für dessen Einziehen in das gegebenenfalls entlang von Kurven verlegte Mantelrohr.

In weiterer Ausbildung des Gegenstandes der Erfindung kann vorgesehen sein, daß die elastische Wärmedämmschicht mit in vorzugsweise regelmäßigen Abständen angeordneten Abstandshaltern für die radiale Distanz zwischen Mantelrohr und Mediumrohr ausgerüstet ist, die auf dem Mediumrohr aufsitzen und deren Außendurchmesser dem beim Einziehen der aus Mediumrohr und Wärmedämmschicht gebildeten Einheit reduzierten Außendurchmesser der Wärmedämmschicht entspricht. Solche Abstandshalter dienen dazu, beim Einziehen der aus Mediumrohr und Wärmedämmschicht gebildeten Einheit in ein mit Richtungsänderungen verlegtes Mantelrohr ein zu starkes Zusammendrücken der Wärmedämmschicht zu vermeiden sowie das Mediumrohr innerhalb des Mantelrohres konzentrisch und stabil zu lagern.

Ferner kann vorgesehen sein, daß in die Wärmedämmschicht die Adern eines Leckwarnsystems eingebettet sind.

Hinsichtlich der Vorrichtungen zur Durchführung der erfindungsgemäßen Verfahrensweise ist es, wie bereits vorstehend beschrieben, vorgesehen, daß die das Mediumrohr umhüllende, elastisch verformbare Wärmedämmschicht ein umgebendes Geflecht aus gleitfähigen oder mit gleitfähigen Mitteln versehenen Metalldrähten oder Kunststofffasern aufweisen kann, welches unter Zugbelastung beim Einziehen der aus Mediumrohr und Wärmedämmschicht gebildeten Einheit in das Mantelrohr eine Durchmesserreduktion der Wärmedämmschicht bewirkt. Dabei kann zur Unterstützung dem Mantelrohr ein trichterförmiger Reduktionsring zur vorschubbegleitenden Verringerung des Außendurchmessers der aus Mediumrohr, Wärmedämmschicht und umgebendem Geflecht gebildeten Einheit vorsetzbar sein.

Im anderen Falle oder auch zusätzlich kann jedoch auch vorgesehen sein, daß die Zugmittel einen sich über die Länge des Mediumrohres erstreckendenden Zugseilabschnitt enthalten, und daß dieser Zugseilabschnitt mit sich entgegen der Zugrichtung radial nach außen aufstellenden, borstenförmigen Stachelkörpern versehen ist, die über den gesamten Umfang des Zugseileabschnittes im wesentlichen gleichmäßig verteilt angeordnet sind. Ein solcher mit borstenförmigen Stachelkörpern versehener Zugseilabschnitt kann beim Einziehen das Mediumrohr über seine gesamte einzuziehende Länge hin gleichmäßig an den einzelnen Wellen des Mediumrohres erfassen. Ist der Einziehvorgang beendet, so wird diese durch das Zugseil mit seinen borstenförmigen Stachelkörpern gebildete Vorrichtung entgegen der Einziehrichtung aus dem Mediumrohr wieder herausgezogen, was keine besonderen Probleme bedeutet.

Ist ein Zugseilabschnitt der vorstehenden Art vorgesehen, so kann es zweckmäßig sein, daß ein dem Zugseilabschnitt in Richtung auf eine Zugvorrichtung vorgeschaltetes Zugseilstück mit Gleitmitteln zur Abstandshaltung, bzw. Bewegungsführung gegenüber dem Mantelrohr ausgerüstet ist, wobei die Gleitmittel durch auf das Zugseilstück aufgesetzte kugelförmige Körper gebildet sein können, die gegebenenfalls auch lösbar auf dem Zugseil aufgebracht sein können. Andererseits kann auch vorgesehen sein, daß die Gleitmittel durch eine Kunststoffummantelung des Zugseilstückes gebildet sind. Hier geht es also darum, das den Zugseilabschnitt, durch den das Mediumrohr im einzelnen zu ergreifen ist, vorgeschaltete Zugseilstück gegenüber dem Mantelrohr so zu führen, daß keine übermäßige Reibung, bzw. kein übermäßiger Verschleiß am Mantelrohr entsteht. Dabei ist selbstverständlich darauf zu achten, daß die Gleitmittel, soweit sie aus auf das Zugseilstück aufgesetzten Körpern bestehen, in regelmäßigem gegenseitigen Abstand angeordnet sind.

Schließlich ist für den Verfahrensschritt der Vorspannung des Mediumrohres nach dem Einziehvorgang eine Weiterbildung geeignet, bei der vorgesehen ist, daß die Enden des Mantelrohres von Ringen aus Metall oder Kunststoff umfaßt sind, daß auf die Enden des gewellten Mediumrohres nach dessen Streckung im wesentlichen halbschalenförmige, mit ihrer inneren Profilierung dem Wellenprofil des Mediumrohres angepaßte, sich mit ihrem Außenmantel in Richtung auf das Mantelrohr konisch verjüngende Klemmstücke aufgesetzt sind, und daß die Klemmstücke unter der Rückzugskraft des Mediumrohres unter Zwischenlage des Mantelrohres gegen den wenigstens endständig konisch aufgeweiteten Innenumfang der Ringe in Anlage gebracht sind.

Mit dieser Weiterbildung läßt sich der in das Mantelrohr eingezogene Abschnitt des mit Wärmedämmschicht umgebenen Mediumrohres in der beschriebenen Weise auf einer Seite festlegen. Am anderen Ende wird das Mediumrohr durch übliche Hilfsmittel, beispielsweise eine angeschweißte Endhülse erfaßt und axial in dem gewünschten Maß gelängt, wobei natürlich von dem gelängten Ende des Mediumrohres der entsprechende Teil der Wärmedämmschicht entfernt werden muß. Dann können auf den gelängten Teil des Mediumrohres die halbschalenförmigen Klemmstücke aufgesetzt werden. Nimmt man nun die Zugspannung vom Mediumrohr fort, so gehen die Klemmstücke in das sich bei dieser Gelegenheit aufweitende Ende des Mantelrohres bis zur Arretierung gegenüber dem zweckmäßig gegen das Erdreich abgestützten Ring, wobei dann das Mantelrohr zwischen dem Ring und den Klemmstücken fest eingespannt ist.

Eine am Ende des Mediumrohres angeschweißte Hülse oder dergleichen kann als Zugmittel verwendet werden. Zweckmäßig ist es in diesem Zusammenhang natürlich, daß auf beiden Seiten der in das Mantelrohr eingezogenen Einheit aus Mediumrohr und dieses umgebender Wärmedämmschicht Anschlußlängen überstehend verbleiben, die die Möglichkeit der Verbindung mit den weiterführenden Leitungselementen geben.

Weitere erfindungswesentliche Einzelheiten ergeben sich aus der nachfolgenden Beschreibung von Ausführungsformen, die auf der Zeichnung dargestellt sind. In der Zeichnung zeigen:
- Figur 1: die grundlegende Anordnung eines erdverlegten Abschnittes einer Fernwärmeleitung;
- Figur 2: einen teilweise geschnittenen Längsschnitt eines Abschnittes der erfindungsgemäßen Fernwärmeleitung;
- Figur 3: eine Funktionsansicht des Innenaufbaus der Fernwärmeleitung gemäß Figur 2;
- Figur 4: eine konstruktiv geänderte Ausbildung der Fernwärmeleitung gemäß Figur 2;
- Figur 5 bis 7: Bauformen für den Einzug des Mediumrohres über an diesem angreifende Zugmittel
- Figur 8: ein Hilfsmittel für den Einzug des Mediumrohres;
- Figur 9: ein Zugseilstück zum Einziehen eines Zugseilabschnittes gemäß Figur 5 bis 7 und
- Figur 10: den Endanschluß für ein axial vorgespanntes Mediumrohr.

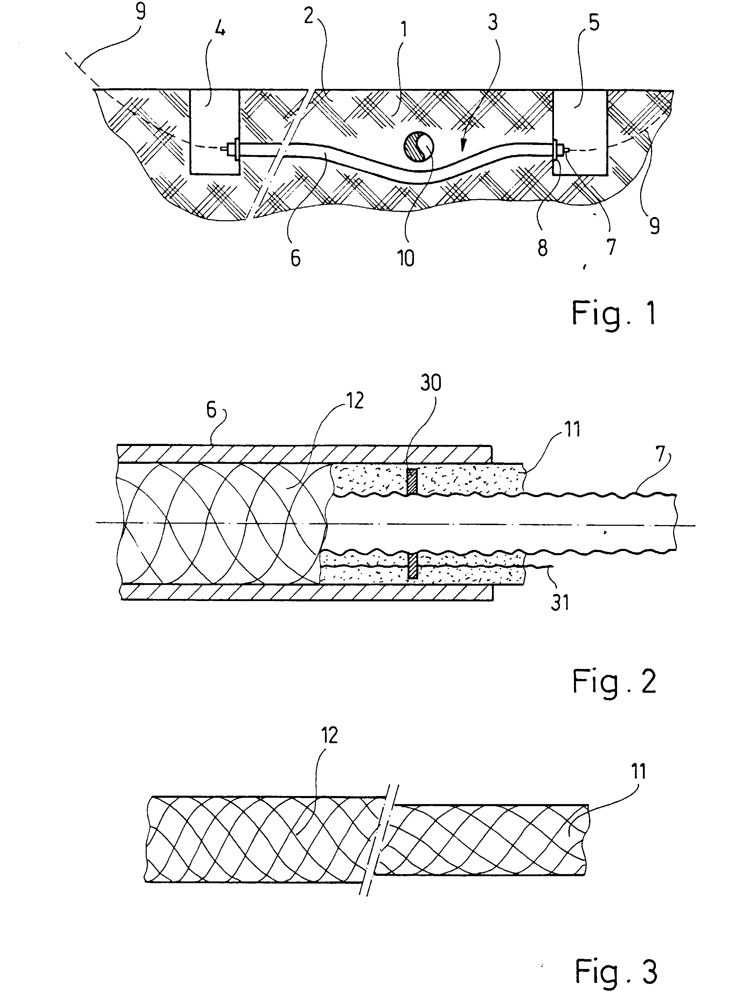

Figur 1 zeigt einen Baugrundausschnitt 1 unterhalb der Erdoberfläche 2. In den Baugrundausschnitt 1 ist durch grabenlose Verlegung ein Fernwärmeleitungsabschnitt 3 eingebracht zwischen Start- und Zielgrube 4 und 5, von denen aus die grabenlose Verlegung durchgeführt worden ist.

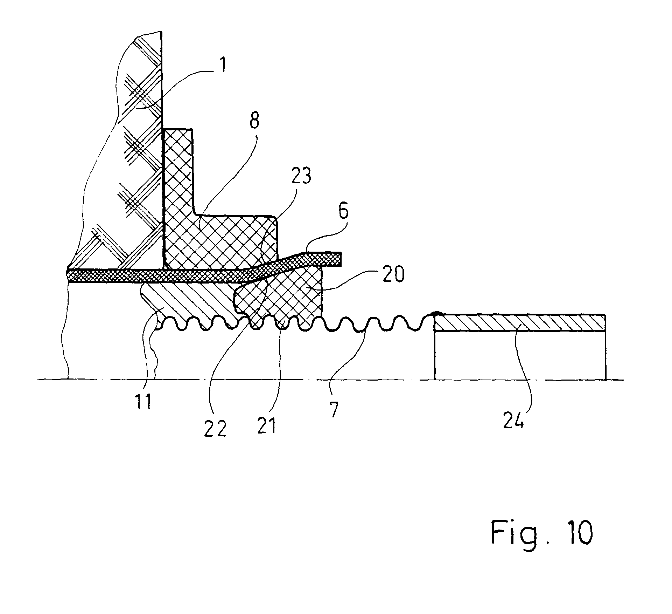

Der Fernwärmeleitungsabschnitt 3 besteht aus einem Mantelrohr 6, in das ein Mediumrohr 7 in Form eines Metallwellschlauches mit einer diesen umgebenden, elastisch verformbaren Wärmedämmschicht eingezogen ist. Die Wärmedämmschicht liegt innerhalb des Mantelrohres 6 und ist in Figur 1 nicht sichtbar. An den Enden sitzen auf dem Mantelrohr 6 noch Ringe 8, deren Bedeutung anhand der Figur 10 erläutert werden wird. Das zum Vorbereiten der Horizontalbohrung eingesetzte Bohrgehänge 9 ist hier nur vereinfacht durch eine gestrichelte Linie dargestellt.

Die grabenlose Verlegung des Fernwärmeleitungsabschnittes 3 erfolgt, wie bereits weiter vorne ausführlich beschrieben, dadurch, daß zunächst in der bekannten Weise das Mantelrohr 6 zwischen Start- und Zielgrube 4 und 5 in das Erdreich eingebracht wird, wobei auf dem Wege auftretende Hindernisse bogenförmig umgangen werden. Danach wird in den durch das erdverlegte Mantelrohr 6 gebildeten Kanal die aus Mediumrohr und dieses umgebender Wärmedämmung gebildete Einheit eingezogen.

Figur 2 zeigt in vergrößertem Maßstab ausschnittweise noch einmal einen Querschnitt durch den Fernwärmeleitungsabschnitt 3. Es ist ersichtlich das Mantelrohr 6, das Mediumrohr 7 in Form eines Metallwellschlauches sowie die das Mediumrohr 7 umgebende Wärmedämmschicht 11, die in fertigem Zustand mit ihrem Außenumfang satt im Mantelrohr 6 sitzt.

Die Wärmedämmschicht enthält in regelmäßigen Abständen angeordnete Abstandshalter 30 für die Distanz zwischen Mantelrohr 6 und Mediumrohr 7, deren Außendurchmesser der nachfolgend anhand der Figur 3 erläuterten Reduzierung des Außendurchmessers der Wärmedämmschicht entspricht. Außerdem sind, wie dies für alle Ausführungsformen der Erfindung gelten soll, in der Wärmedämmschicht 11 die Adern 31 bekannter Leckwarnsysteme eingesetzt.

Um nun den Einziehvorgang der aus Mediumrohr 7 und Wärmedämmschicht 11 gebildeten Einheit in das Mantelrohr 6 zu ermöglichen, ist die Wärmedämmschicht 11, die aus elastisch verformbarem Material besteht, außen durch ein loses bzw. grobmaschiges Geflecht 12 in Form eines Geflechtsschlauches umgeben. Wird nun zur Durchführung des genannten Einziehvorganges die Einzugskraft an einem Ende des jeweils einzuziehenden Abschnittes durch Erfassen des Geflechtes 12 auf dieses übertragen, so führt dies aufgrund bekannter Gesetzmäßigkeiten dazu, daß sich der aus dem Geflecht 12 gebildete Schlauch in seinem Durchmesser verringert, wie dies Figur 3 zeigt, in der links ein Abschnitt mit Geflecht ohne Zugbelastung und rechts ein Abschnitt unter Zugbelastung dargestellt ist. Wie in Verbindung mit Figur 3 deutlich, erfährt auf diese Weise der Außendurchmesser der Wärmedämmschicht 11 eine Reduzierung, die es erlaubt, die aus Mediumrohr 7 und Wärmedämmschicht 11 gebildete Einheit unter Spiel gegenüber dem Mantelrohr 6 in dieses einzuziehen. Wird nach dem Einziehvorgang die Zugbelastung wieder vom Geflecht 12 fortgenommen, so weitet sich die Wärmedämmschicht 11 auf ihren ursprünglichen Durchmesser auf, bei dem sie satt an der Innenseite des Mantelrohres 6 anliegt.

Zur Unterstützung dieses Einziehvorganges kann selbstverständlich auch ein Teil der Zugkraft auf das Ende des Mediumrohres aufgebracht werden. Es versteht sich im Zusammenhang mit dem Einziehvorgang von selbst, daß Geflecht 12 und gegebenenfalls Mediumrohr 7 an dem nicht von der Zugkraft beaufschlagten Ende der einzuziehenden Einheit gegengehalten werden.

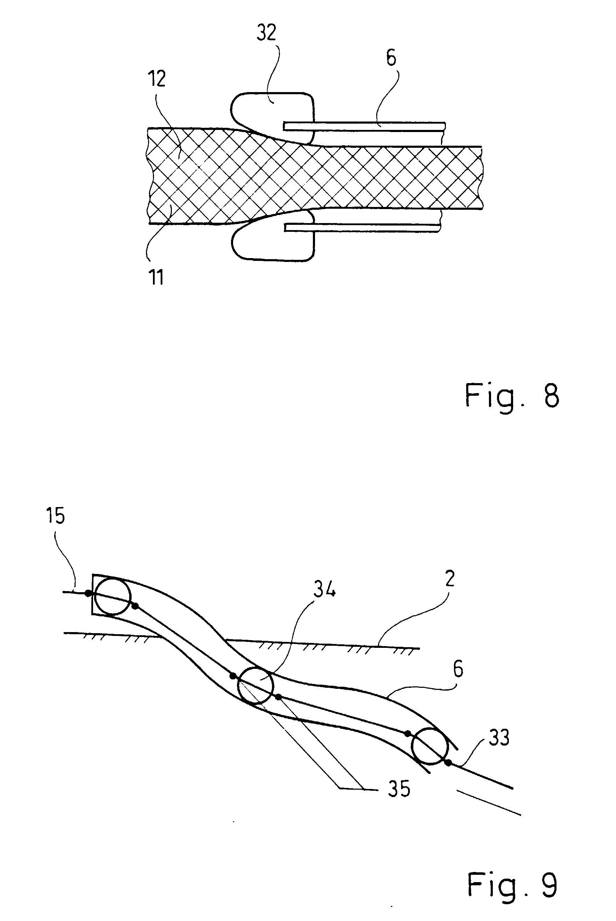

Zur weiteren wesentlichen Unterstützung des Einziehvorganges kann gemäß Figur 8 ein trichterförmiger Reduktionsring 32 zur vorschubbegleitenden Verringerung des Außendurchmessers der aus Mediumrohr 7, Wärmedämmschicht 11 und umgebendem Geflecht 12 gebildeten Einheit dem Mantelrohr 6 vorgesetzt sein. Dieser Ring 32 schnürt die Einheit allmählich ein, so daß sie dann problemlos in das Mantelrohr 6 eingeführt werden kann.

Das Geflecht 12 besteht aus gegenüber dem Mantelrohr 6 gleitfähigen Metalldrähten oder Kunststoffasern. Zweckmäßig besteht auch die Außenseite der Wärmedämmschicht 11 aus gegenüber dem Mantelrohr 6 gleitfähigem Material.

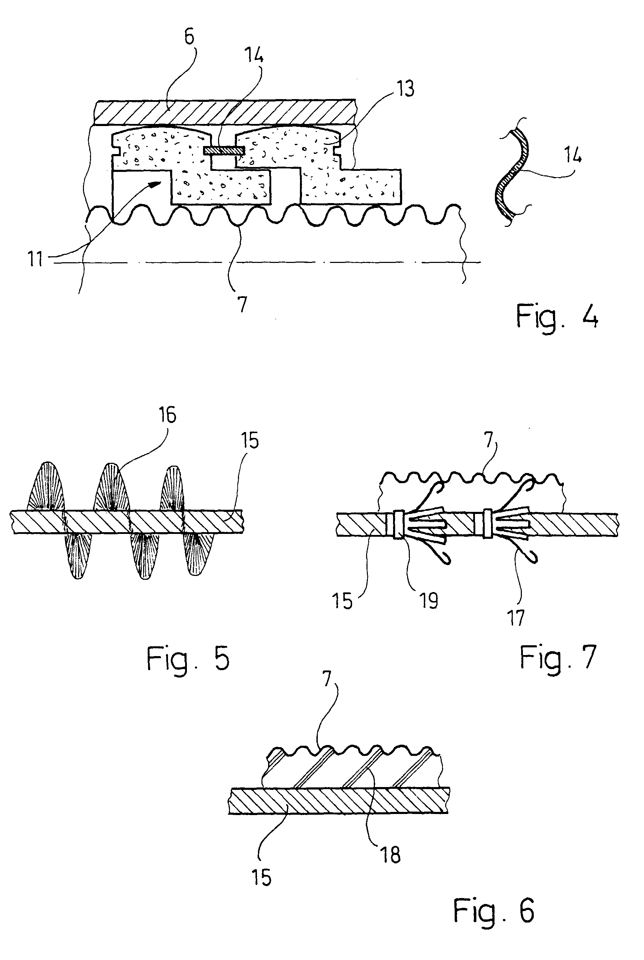

Beim Beispiel gemäß Figur 2 hat die Wärmedämmschicht 11 aus elastischem Material im wesentlichen den Aufbau eines durchgehenden Hohlzylinders. Eine Abwandlung hierzu zeigt Figur 4, in der ersichtlich nur ein vereinfachter Ausschnitt der Fernwärmeleitung dargestellt ist. Hier ist die Wärmedämmschicht durch konzentrisch miteinander in Eingriff befindliche Ringe 13 gebildet, wobei die einzelnen Ringe 13 durch schlangenförmig verlaufende Federelemente 14 miteinander in Verbund gebracht sein können, um bei Krümmungsbewegungen des Mediumrohres 7 in Axialrichtung gegeneinander arbeiten zu können, andererseits untereinander auf gleichem Abstand gehalten zu werden. Diese Ausbildung der Wärmedämmschicht 11 verbessert die Möglichkeit, das aus Mediumrohr 7 und Wärmedämmschicht 11 gebildete Material auf Trommeln zu wickeln, indem die einzelnen Ringe 13 auf der Innenseite des dabei gebildeten Krümmungsbogens sich aneinander annähern, während sie sich auf der Außenseite des Krümmungsbogens voneinander entfernen.

Zur Unterstützung des Einziehvorganges kann auch eine Vorrichtung dienen, wie sie in einigen Varianten in den Figuren 5 bis 7 vereinfacht dargestellt ist. Diese Vorrichtung soll - innerhalb des Mediumrohres angeordnet - das Mediumrohr über die gesamte Strecke der einzuziehenden Länge gleichmäßig über die gesamte Streckenlänge verteilt an den Wellen des Mediumrohres ergreifen, so daß unter Belastung der Vorrichtung mit der Einziehkraft das Mediumrohr über seine gesamte Länge gleichmäßig belastet eingezogen wird.

Dazu besteht die Vorrichtung aus einem Zugmittel mit einem Zugseilabschnitt 15, der mit sich entgegen der Zugrichtung radial nach außen aufstellenden, borstenförmigen Stachelkörpern 16, 17, 18 versehen ist, die über den gesamten Umfang des Zugseilsabschnittes 15 im wesentlichen gleichmäßig verteilt angeordnet sind.

Gemäß Figur 5 stehen vor dem Einziehen in das Mediumrohr die Stachelkörper 16, die in bekannter Weise bei der Herstellung des Seiles 15 schraubengangförmig in diesem befestigt sind, senkrecht und können, wie Figur 6 veranschaulicht, nach dem Einziehen in das Mediumrohr 7, schräg gestellt 18, in die Wellen des Mediumrohres 7 eingreifen. Beim Beispiel gemäß Figur 7 sind auf dem Stahlseil 15 Hülsen 19 befestigt, von denen schräg nach außen gerichtet blattfederartige Stacheln 17 ausgehen, die sich bei entsprechender Zugbelastung des Stahlseiles 15 in die Wellen des Mediumrohres 7 eindrücken.

Ersichtlich stellen sich die jeweiligen Stachelkörper auf und treten mit ihren freien Enden in die Wellung des Mediumrohres 7 ein, wenn das Stahlseil eine bezogen auf die Zeichnung von links nach rechts gerichtete Zugbelastung erfährt. Ist der aus Mediumrohr 7 und Wärmedämmschicht 11 gebildete Abschnitt in das Mantelrohr 6 eingezogen, so kann das Stahlseil 15 in entgegengesetzter Richtung leicht aus dem Mediumrohr 7 herausgezogen werden, weil dann die Stachelkörper sich nicht mit den Wellen des Mediumrohres verhaken können.

Um den Zugseilabschnitt 15 durch das Mantelrohr 6 zu bewegen, ist die Vorschaltung eines Zugseilstückes 33 erforderlich: (siehe Figur 9) Damit dieses nicht unter Bildung eines Reibeverschleißes mit dem Mantelrohr 6 in Berührung kommt, kann das Zugseilstück mit Gleitmitteln insbesondere in Form von kugelförmigen Körpern 34 ausgerüstet sein, die in regelmäßigen Abständen gegebenenfalls lösbar (Arretierungen 35) auf dem Zugseilstück angeordnet sind. Diese Gleitmittel bzw. diese Gleitkörper distanzieren das zum Einziehen des Zugseilabschnittes 15 erforderliche Zugseilstück 33 gegenüber dem Mantelrohr 6 auch bei kurvenförmigem Verlauf des Mantelrohres 6. Es versteht sich von selbst, daß die Länge des Zugseilstückes zumindest der Länge des jeweiligen Abschnittes der Fernwärmeleitung entsprechen muß.

Im Unterschied zur bisherigen Schilderung ist es jedoch auch denkbar, die aus Mediumrohr 7 und Wärmedämmung 11 bestehende Einheit mit der anhand der Figuren 5 bis 7 beschriebenen Vorrichtung allein in das Mantelrohr 6 einzuziehen. Hierzu muß nur darauf geachtet werden, daß das Material der Wärmedämmschicht 11 eine ausreichend große Elastizität aufweist und andererseits aus sehr gut gegenüber dem Mantelrohr 6 gleitfähigem Material besteht. In diesem Falle kann dann die Umflechtung 12 fortfallen.

Ist nun die aus Mediumrohr 7 und Wärmedämmung 11 bestehende Einheit in das Mantelrohr 6 eingezogen, soll das Mediumrohr 7 in Längsvorspannung gebracht und in dieser Vorspannsituation fixiert werden. Dabei soll die Längsvorspannung eine solche Größenordnung haben, daß sie die im Betrieb zu erwartende Wärmedehnung des Mediumrohres sowie die aufgrund eines Innendruckes zu erwartende Längenänderung des Mediumrohres überschreitet, also stets diese im Betrieb zu erwartenden Längenänderungen des Mediumrohres kompensiert.

Hierzu dient die anhand der Figur 10 ausschnittweise an einem Ende des Fernwärmeleitungsabschnittes dargestellte Vorrichtung. Sie besteht aus einem geschlossen umlaufenden Winkelring 8, der gegen das Erdreich 1 abgestützt ist, sowie halbschalenförmigen Klemmstücken 20, die mit ihrer inneren Profilierung 21 der Profilierung des Mediumrohres 7 angepaßt und so formschlüssig auf das Mediumrohr 7 aufgesetzt sind. Die Klemmstücke 20 weisen auf ihrer Außenseite eine sich in Richtung auf das Ende des Mantelrohres 6 erstreckende konische Erweiterung 22 auf, die mit einer konischen Erweiterung 23 am freien Ende des Winkelringes 8 korrespondiert. Zwischen diesen konischen Teilen ist das Ende des Mandtelrohres 6 eingespannt.

Figur 10 zeigt die in Rede stehende Vorrichtung in endgültigem Zustand, wobei man sich das Mediumrohr 7 in der längsgestreckten Situation vorzustellen hat. Dabei liegt die Längsstreckung des Mediumrohres 7 zum Erhalt der gewünschten Vorspannung bei ca. 5 bis 10 mm je Meterlänge des insgesamten Fernwärmeleitungsabschnittes. Zum Erhalt dieser Längsstreckung des Mediumrohres wird so vorgegangen, daß zunächst am anderen, nicht dargestellten Ende des Leitungsabschnittes eine aus Winkelring 8 und Klemmstücken 20 bestehende Vorrichtung gemäß Figur 10 als Gegenlager angebracht wird.

Nunmehr wird das dargestellte Ende des Mediumrohres 7, beispielsweise über eine angeschweißte Endhülse 24, ergriffen und um den seiner Länge entsprechenden Betrag plus einem der Breite der Klemmstücke 20 entsprechenden Überschuß vorgezogen. Nach Entfernen der überschüssigen Teile der Wärmedämmung 11 und dem Aufsetzen des Winkelringes 8 werden die Klemmstücke 20 bei einer dabei zunächst gegenüber der zeichnerischen Darstellung weiter rechts liegenden Position aufgesetzt. Nunmehr wird die an der Endhülse 24 angreifende Zugkraft fortgenommen und es rutschen die Klemmstücke 20 unter der zurückziehenden Kraft des Mediumrohres 7 in das Ende des Mantelrohres 6 ein so lange, bis sie in die in Figur 10 dargestellte Position gelangen. Damit ist das Mediumrohr 7 in der axial gelenkten Position festgelegt.

Es versteht sich von selbst und entspricht den Tatsachen, daß bei dieser Längung des Mediumrohres 7 letzteres nur im elastischen Bereich verformt wird. Im übrigen kann es auch genügen, den Ring 8 ohne seinen am Erdreich 1 abgestützten Bereich auszubilden, also so, daß er mit Abstand vom Erdreich 1 steht. Dann wäre die Kraft, die sich aus der Rückfederung des Mediumrohres 7 ergibt, nur über das Ende des Mantelrohres 6 abgestützt. Vergleichsweise wird jedoch der in Figur 10 dargestellten Bauform der Vorzug gegeben.

Schließlich kann nunmehr an das überstehende, freie Ende des Mediumrohres über die Endhülse 24 das weiterführende Leitungssystem beispielsweise in Form eines Kunststoffmantelrohres angeschweißt werden, wonach die Stoßverbindung durch eine Wärmedämmung umgeben wird und schließlich zur Fortsetzung des Mantelrohres 6 ein Außenmantel in Form von Muffen, Schrumpfmanschetten oder dergleichen aufgesetzt wird.

Bei dem so grabenlos im Erdreich verlegten Fernwärmeleitungsabschnitt ist die Anordnung ersichtlich so getroffen, daß die Leitung keine Bewegungen oder Dehnungen von den angeschlossenen Systemen 9 aufnimmt und auch an diese Systeme keine Bewegungen oder Dehnungen abgibt.

## Patentansprüche

1. Verfahren zur grabenlosen Verlegung von Abschnitten von Fernwärmeleitungen im Erdreich mit einem Mantelrohr aus Kunststoff, einem Mediumrohr und einer zwischen Mantelrohr und Mediumrohr angeordneten Wärmedämmschicht, wobei ein glattwandiges Mantelrohr (6) grabenlos verlegt wird und danach darin ein Mediumrohr in Form eines Metallwellschlauches (7) mit einer diesen umgebenden Wärmedämmschicht (11), deren Außendurchmesser dem Innendurchmesser des Mantelrohres im wesentlichen entspricht, durch an der Gesamtheit von Mediumrohr (7) und/oder Wärmedämmschicht (11) über deren gesamter Längserstreckung zumindest stellenweise angreifende Zugmittel (12, 15 bis 19, 33) eingezogen wird.

2. Verfahren nach Anspruch 1,
dadurch gekennzeichnet,
daß das Mediumrohr (7) und dessen umgebende, elastisch verformbare Wärmedämmschicht (11) über ein die Wärmedämmschicht umgebendes Geflecht (12) aus gleitfähigen oder mit gleitfähigen Mitteln versehenen Metalldrähten oder Kunststoffasern eingezogen werden.

3. Verfahren nach Anspruch 2,
dadurch gekennzeichnet,
daß das Einziehen des Mediumrohres (7) und dessen umgebender Wärmedämmschicht (11) durch Aufbringen einer Zugbelastung auf das Mediumrohr (7) unterstützt wird.

4. Verfahren nach Anspruch 1 und/oder 2,
dadurch gekennzeichnet,
daß das Einziehen von Mediumrohr (7) und dessen umgebender Wärmedämmschicht (11) aus gleitfähigem Material über ein einzelne Wellen des Mediumrohres von innen gleichzeitig ergreifendes Zugmittel (15 bis 19) erfolgt.

5. Verfahren nach einem der vorhergehenden Ansprüche,
dadurch gekennzeichnet,
daß das Mediumrohr (7) nach Abschluß des Einziehvorganges in Axialrichtung auf ein spätere Wärmedehnungsvorgänge des Mediumrohres überschreitendes Maß vorgespannt bzw. einer entsprechenden Längenänderung unterzogen wird.

6. Fernwärmeleitung mit einem Mantelrohr, einem Mediumrohr und einer zwischen Mantelrohr und Mediumrohr angeordneten Wärmedämmschicht, wobei
die Leitung aus einem außen glattwandigen Mantelrohr (6) aus Kunststoff , und einem Mediumrohr (7) in Form eines Metallwellschlauches besteht, dadurch gekennzeichnet, daß eine den Metallwellschlauch umgebende, einen niedrigen Reibwert gegenüber dem Mantelrohr (6) aufweisende Wärmedämmschicht (11) in das Mantelrohr im wesentlichen spielfrei eingezogen ist.

7. Fernwärmeleitung nach Anspruch 6,
dadurch gekennzeichnet,
daß die Wärmedämmschicht (11) von einem sich unter Zugbelastung radial verjüngenden Geflecht (12) aus mit gleitfähigen Mitteln versehenen Metalldrähten oder Kunststoffasern umgeben ist.

8. Fernwärmeleitung nach Anspruch 6 oder 7,
dadurch gekennzeichnet,
daß die Wärmedämmschicht (11) des Mediumrohres (7) durch konzentrisch miteinander in Eingriff befindliche, gegenseitig axial beabstandete Ringe (13) gebildet ist.

9. Fernwärmeleitung nach Anspruch 7,
dadurch gekennzeichnet,
daß die elastische Wärmedämmschicht (11) mit in vorzugsweise regelmäßigen Abständen angeordneten Abstandshaltern (30) für die radiale Distanz zwischen Mantelrohr (6) und Mediumrohr (7) ausgerüstet ist, die auf dem Mediumrohr aufsitzen und deren Außendurchmesser dem beim Einziehen der aus Mediumrohr und Wärmedämmschicht gebildeten Einheit reduzierten Außendurchmesser der Wärmedämmschicht entspricht.

10. Fernwärmeleitung nach einem der Ansprüche 6 bis 9,
dadurch gekennzeichnet,
daß in der Wärmedämmschicht (11) die Adern (31) eines Leckwarnsystems eingebettet sind.

11. Vorrichtung zur Durchführung des Verfahrens nach Anspruch 2,
dadurch gekennzeichnet,
daß die das Mediumrohr (7) umhüllende, elastisch verformbare Wärmedämmschicht (11) ein umgebendes Geflecht (12) aus gleitfähigen oder mit gleitfähigen Mitteln versehenen Metalldrähten oder Kunststoffasern ausweist, welches unter Zugbelastung beim Einziehen der aus Mediumrohr und Wärmedämmschicht gebildeten Einheit in das Mantelrohr (6) eine Durchmesserreduktion der Wärmedämmschicht bewirkt.

12. Vorrichtung nach Anspruch 11,
dadurch gekennnzeichnet,
daß dem Mantelrohr (6) ein trichterförmiger Reduktionsring (32) zur vorschubbegleitenden Verringerung des Außendurchmessers der aus Mediumrohr (7), Wärmedämmschicht (11) und umgebenden Geflecht (12) gebildeten Einheit vorsetzbar ist.

13. Vorrichtung zur Durchführung des Verfahrens nach Anspruch 4,
dadurch gekennzeichnet,
daß die Zugmittel eine sich über die Länge des Mediumrohres (7) erstreckenden Zugseilabschnitt (15) enthalten und daß dieser Zugseilabschnitt mit sich entgegen der Zugrichtung nach radial außen aufstellenden, borstenförmigen Stachelkörpern (16, 17, 18) versehen ist, die über den gesamten Umfang des Zugseilabschnittes im wesentlichen gleichmäßig verteilt angeordnet sind.

14. Vorrichtung nach Anspruch 13,
dadurch gekennzeichnet,
daß ein dem Zugseilabschnitt (15) in Richtung auf eine Zugvorrichtung vorgeschaltetes Zugseilstück (33) von wenigstens der Länge des zu verlegenden Fernwärmleitungsabschnittes mit Gleitmitteln zur Abstandshalterung, bzw. Bewegungsführung gegenüber dem Mantelrohr (6) ausgerüstet ist.

15. Vorrichtung nach Anspruch 14,
dadurch gekennzeichnet,
daß die Gleitmittel durch auf das Zugseilstück (33) aufgesetzte kugelförmige Körper (34) gebildet sind.

16. Vorrichtung nach Anspruch 15,
dadurch gekennzeichnet,
daß die kugelförmigen Körper (34) lösbar auf dem Zugseilstück (33) angebracht sind.

17. Vorrichtung nach Anspruch 14,
dadurch gekennzeichnet,
daß die Gleitmittel durch eine Kunststoffummantelung des Zugseilstückes (33) gebildet sind.

18. Fernwärmeleitung nach Anspruch 6,
dadurch gekennzeichnet,
daß die Enden des Mantelrohrs (6) von Ringen (8) aus Metall oder Kunststoff umfaßt sind, daß auf die Enden des gewellten Mediumrohres (7) nach dessen Streckung im wesentlichen halbschalenförmige, mit ihrer inneren Profilierung (21) dem Wellprofil des Mediumrohres angepaßte, sich mit ihrem Außenmantel in Richtung auf das Mantelrohr konisch verjüngende (22) Klemmstücke (20) aufgesetzt sind, und daß die Klemmstücke unter der Rückzugskraft des Mediumrohres unter Zwischenlage des Mantelrohres gegen den wenigstens endständig konisch aufgeweiteten (23) Innenumfang der Ringe in Anlage gebracht sind.

19. Fernwärmeleitung nach Anspruch 18,
dadurch gekennzeichnet,
daß die Ringe (8) gegen das Erdreich (1) abgestützt sind.

## Claims

1. Method for laying sections of remote-heating conduits in the ground without excavation, said conduits comprising a jacket pipe composed of synthetic material, a media-conveying pipe and a thermal insulation layer disposed between the jacket pipe and the media-conveying pipe, in which a smooth-walled jacket pipe (6) is laid without excavation and thereafter a media-conveying pipe in the form of a flexible corrugated metal tube (7) with a thermal insulation layer (11) enclosing said metal tube (7), the outside diameter of said insulation layer generally corresponding to the inside diameter of the jacket pipe, is drawn into said jacket pipe (6) by means of draw means (12, 15-19, 33) which contact the entirety of the media-conveying pipe (7) and/or the thermal insulation layer (11) at least in places over their entire length.

2. Method according to Claim 1, characterised in that the media-conveying pipe (7) and its enclosing elastically deformable thermal insulation layer (11) are drawn in by way of a braid (12) which surrounds the thermal insulation layer and is composed of metal wires or synthetic-material fibres which are slidable or are provided with slidable means.

3. Method according to Claim 2, characterised in that the drawing-in of the media-conveying pipe (7) and its surrounding thermal insulation layer (11) is assisted by the application of a tensile load to the media-conveying pipe (7).

4. Method according to Claim 1 and/or Claim 2, characterised in that the drawing-in of the media-conveying pipe (7) and its surrounding thermal insulation layer (11) of slidable material takes place by way of a draw means (15-19) which grips individual corrugations of the media-conveying pipe simultaneously from the inside.

5. Method according to any one of the preceding claims, characterised in that the media-conveying pipe (7) after the conclusion of the drawing-in process is prestressed in an axial direction to an extent exceeding later thermal expansions of the media-conveying pipe, or is subjected to a corresponding change in length.

6. Remote-heating conduit comprising a jacket pipe, a media-conveying pipe and a thermal insulation layer disposed between said jacket pipe and said media-conveying pipe, in which the conduit consists of an outwardly smothwalled jacket pipe (6) of synthetic material and a media-conveying pipe (7) in the form of a flexible corrugated metal tube,
characterised in that
a thermal insulation layer (11) which surrounds the flexible corrugated metal tube and has a low coefficient of friction with respect to the jacket pipe (6) is drawn into the jacket pipe generally without play.

7. Remote-heating conduit according to Claim 6, characterised in that the thermal insulation layer (11) is surrounded by a braid (12) tapering radially under tensile loading, said braid being composed of metal wires or synthetic-material fibres provided with slidable means.

8. Remote-heating conduit according to Claim 6 or Claim 7, characterised in that the thermal insulation layer (11) of the media-conveying pipe (7) is formed by rings (13) which engage each other concentrically and are axially spaced apart from each other.

9. Remote-heating conduit according to Claim 7, characterised in that the elastic thermal insulation layer (11) is equipped with spacing supports (30) for the radial distance between the jacket pipe (6) and the media-conveying pipe (7), said supports being disposed at preferably regular intervals, the supports sitting on the media-conveying pipe, their outside diameter corresponding to the outside diameter of the thermal insulation layer, the latter outside diameter being reduced when the unit constituted by the media-conveying pipe and the thermal insulation layer is drawn in.

10. Remote-heating conduit according to any one of Claims 6 to 9, characterised in that the conductors (31) of a leakage warning system are embedded in the thermal insulation layer (11).

11. Device for implementing the method according to Claim 2,
characterised in that
the elastically deformable thermal insulation layer (11) enshrouding the media-conveying pipe (7) has a surrounding braid (12) of metal wires or synthetic-material fibres which are slidable or are provided with slidable means, said braid causing a reduction in diameter of the thermal insulation layer under tensile loading when the unit constituted by the media-conveying pipe and the thermal insulation layer is drawn into the jacket pipe (6).

12. Device according to Claim 11, characterised in that a funnel-shaped reduction ring (32) can be placed in front of the jacket pipe (6), said ring serving to reduce, during feed, the outside diameter of the unit constituted by the media-conveying pipe (7), the thereof insulation layer (11) and the surrounding braid (12).

13. Device for the implementation of the method according to Claim 4, characterised in that the draw means contain a section of draw line (15) extending over the length of the media-conveying pipe (7), and in that said section of draw line is provided with bristle-shaped barb elements (16, 17, 18) which line up radially on the outside against the direction of pull and are generally uniformly distributed over the entire circumference of the section of draw line.

14. Device according to Claim 13, characterised in that a piece of draw line (33) connected in front of the section of draw line (15) in the direction of a drawing device and of at least the length of the remote-heating conduit section to be laid, is equipped with slide means for spacing-support purposes or for the guiding of movement with respect to the jacket pipe (6).

15. Device according to Claim 14, characterised in that the slide means are constituted by spherical bodies (34) placed on the piece of draw line (33).

16. Device according to Claim 15, characterised in that the spherical bodies (34) are detachably mounted on the piece of draw line (33).

17. Device according to Claim 14, characterised in that the slide means are constituted by a sheath of the piece of draw line (33), said sheath being composed of synthetic material.

18. Remote-heating conduit according to Claim 6, characterised in that the ends of the jacket pipe (6) are clasped by rings (8) of metal or synthetic material, in that onto the ends of the corrugated media-conveying pipe (7) after it has been stretched are placed generally half-dishshaped clamp pieces (20) which are matched in their inner profiling (21) to the corrugated profile of the media-conveying pipe and are conically tapered (22) in their outer casing toward the jacket pipe, and in that the clamp pieces, under the restoring force of the media-conveying pipe, are brought to bear by way of said jacket pipe against the inner circumference of the rings, said inner circumference being conically enlarged at the ends (23).

19. Remote-heating conduit according to Claim 18, characterised in that the rings (8) are supported against the ground (1).

## Revendications

1. Procédé pour la pose dans le sol sans excavation de tronçons de conduits de chauffage à grande distance avec un tube d'enveloppe en matière plastique, un tube de fluide et une couche calorifuge disposée entre le tube d'enveloppe et le tube de fluide, selon lequel on pose sans excavation un tube d'enveloppe (6) à paroi lisse, puis on tire dans ce tube d'enveloppe un tube de fluide sous la forme d'un tuyau souple ondulé métallique (7) qui est entouré d'une couche calorifuge (11) dont le diamètre extérieur correspond sensiblement au diamètre intérieur du tube d'enveloppe, à l'aide de moyens de traction (12, 15 à 19, 33) agissant au moins par endroits sur la totalité de l'étendue longitudinale de l'ensemble du tube de fluide (7) et/ou de la couche calorifuge (11).

2. Procédé selon la revendication 1, caractérisé en ce que le tube de fluide (7) et la couche calorifuge (11) élastiquement déformable qui l'entoure sont tirés à l'aide d'un treillis (12), entourant la couche calorifuge, de fibres synthétiques ou de fils métalliques glissants ou pourvus de moyens de glissement.

3. Procédé selon la revendication 2, caractérisé en ce que le tirage du tube de fluide (7) et de la couche calorifuge (11) qui l'entoure est assisté par l'exercice d'une sollicitation en traction sur le tube de fluide (7).

4. Procédé selon la revendication 1 et/ou 2, caractérisé en ce que le tirage du tube de fluide (7) et de la couche calorifuge (11) en matériau glissant qui l'entoure s'effectue à l'aide d'un moyen de traction (15 à 19) saisissant simultanément de l'intérieur des ondulations individuelles du tube de fluide.

5. Procédé selon une des revendications précédentes, caractérisé en ce que le tube de fluide (7) est, une fois le processus de tirage terminé, précontraint en direction axiale dans une mesure dépassant des processus ultérieurs de dilatation thermique du tube de fluide, ou soumis à une modification de longueur correspondante.

6. Conduit de chauffage à grande distance avec un tube d'enveloppe, un tube de fluide et une couche calorifuge disposée entre le tube d'enveloppe et le tube de fluide, le conduit étant constitué d'un tube d'enveloppe (6) en matière plastique à paroi extérieure lisse et d'un tube de fluide (7) sous la forme d'un tuyau souple ondulé métallique, caractérisé en ce qu'une couche calorifuge (11), entourant le tuyau souple ondulé métallique et présentant un plus petit coefficient de frottement que le tube d'enveloppe (6), est tirée sensiblement sans jeu dans le tube d'enveloppe.

7. Conduit de chauffage à grande distance selon la revendication 6, caractérisé en ce que la couche calorifuge (11) est entourée d'un treillis (12), se rétrécissant radialement sous une sollicitation en traction, de fibres synthétiques ou de fils métalliques pourvus de moyens de glissement.

8. Conduit de chauffage à grande distance selon la revendication 6 ou 7, caractérisé en ce que la couche calorifuge (11) du tube de fluide (7) est formée par des bagues (13) qui sont axialement distantes les unes des autres et qui se trouvent concentriquement en engagement mutuel.

9. Conduit de chauffage à grande distance selon la revendication 7, caractérisé en ce que la couche calorifuge élastique (11) est équipée d'écarteurs (30) disposés de préférence à intervalles réguliers pour maintenir la distance radiale entre le tube d'enveloppe (6) et le tube de fluide (7), écarteurs qui reposent sur le tube de fluide et dont le diamètre extérieur correspond au diamètre extérieur, de la couche calorifuge, réduit lors du tirage de l'unité constituée du tube de fluide et de la couche calorifuge.

10. Conduit de chauffage à grande distance selon une des revendications 6 à 9, caractérisé en ce que les conducteurs (31) d'un système avertisseur de fuites sont incorporés dans la couche calorifuge (11).

11. Dispositif pour la mise en oeuvre du procédé selon la revendication 2, caractérisé en ce que la couche calorifuge élastiquement déformable (11) entourant le tube de fluide (7) présente un treillis (12) qui l'enveloppe et est constitué de fibres synthétiques ou de fils métalliques glissants ou pourvus de moyens de glissement, treillis qui produit une réduction du diamètre de la couche calorifuge sous une sollicitation en traction lors du tirage dans le tube d'enveloppe (6) de l'unité constituée du tube de fluide et de la couche calorifuge.

12. Dispositif selon la revendication 11, caractérisé en ce qu'une bague réductrice (32) en entonnoir peut être placée devant le tube d'enveloppe (6) afin de réduire, lors de l'avancement, le diamètre extérieur de l'unité constituée du tube de fluide (7), de la couche calorifuge (11) et du treillis enveloppant (12).

13. Dispositif pour la mise en oeuvre du procédé selon la revendication 4, caractérisé en ce que les moyens de traction comprennent un tronçon de câble de traction (15) s'étendant sur la longueur du tube de fluide (7), et en ce que ce tronçon de câble de traction est pourvu d'ergots (16, 17, 18) en forme de poils de brosserie qui se dressent radialement vers l'extérieur à l'encontre de la direction de traction et qui sont répartis de façon sensiblement régulière sur toute la circonférence du tronçon de câble de traction.

14. Dispositif selon la revendication 13, caractérisé en ce qu'un tronçon de câble de traction (33) au moins de la longueur du tronçon de conduit de chauffage à grande distance à poser, tronçon qui précède le tronçon de câble de traction (15) en direction d'un dispositif de traction, est équipé de moyens de glissement pour le maintien de la distance ou encore le guidage en déplacement par rapport au tube d'enveloppe (6).

15. Dispositif selon la revendication 14, caractérisé en ce que les moyens de glissement sont formés par des corps (34) en forme de boules montés sur le tronçon de câble de traction (33).

16. Dispositif selon la revendication 15, caractérisé en ce que les corps en forme de boules (34) sont montés de manière amovible sur le tronçon de câble de traction (33).

17. Dispositif selon la revendication 14, caractérisé en ce que les moyens de glissement sont formés par un enrobage en matière plastique du tronçon de câble de traction (33).

18. Conduit de chauffage à grande distance selon la revendication 6, caractérisé en ce que les extrémités du tube d'enveloppe (6) sont entourées par des bagues (8) en métal ou en matière plastique, en ce que des pièces de serrage (20), dont le profilage intérieur (21) est adapté au profil ondulé du tube de fluide et dont l'enveloppe extérieure se rétrécit coniquement (22) en direction du tube d'enveloppe, et qui sont essentiellement en forme de demi-coques à la suite de l'étirage du tube de fluide, sont posées sur les extrémités du tube de fluide ondulé (7), et en ce que les pièces de serrage sont, sous la force de rappel du tube de fluide et avec intercalation du tube d'enveloppe, amenées en application contre la périphérie intérieure, élargie coniquement (23) au moins terminalement, des bagues.

19. Conduit de chauffage à grande distance selon la revendication 18, caractérisé en ce que les bagues (8) s'appuient contre le sol (1).
